(19) Europäisches Patentamt
European Patent Office
Office européen des brevets

(11) **EP 3 710 757 B1**

(12) **EUROPEAN PATENT SPECIFICATION**

(45) Date of publication and mention
of the grant of the patent:
**14.01.2026 Bulletin 2026/03**

(21) Application number: **18839751.7**

(22) Date of filing: **15.11.2018**

(51) International Patent Classification (IPC):
*F24D 5/12* (2006.01)      *E04B 1/76* (2006.01)
*E04C 2/52* (2006.01)      *F24F 5/00* (2006.01)
*F24F 12/00* (2006.01)      *E06B 7/02* (2006.01)

(52) Cooperative Patent Classification (CPC):
**F24D 5/12; F24F 5/0075; F24F 12/003;** E04B 1/74;
F24D 2200/12; F24D 2200/31; F24D 2220/006;
Y02A 30/00; Y02B 10/70; Y02B 30/13; Y02B 30/52;
Y02B 30/56; Y02B 30/90

(86) International application number:
**PCT/NL2018/050767**

(87) International publication number:
**WO 2019/098832 (23.05.2019 Gazette 2019/21)**

(54) **CLIMATE CONTROL SYSTEM PROVIDED WITH AN INSULATION ASSEMBLY**

KLIMATISIERUNGSSYSTEM MIT EINER ISOLATIONSANORDNUNG

SYSTÈME DE CLIMATISATION POURVU D'UN ENSEMBLE D'ISOLATION

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **15.11.2017 NL 1042647**

(43) Date of publication of application:
**23.09.2020 Bulletin 2020/39**

(73) Proprietors:
• **Innovy**
**1851 AG Heiloo (NL)**

• **Hagg, Franklin**
**1851 AG Heiloo (NL)**

(72) Inventor: **HAGG, Franklin**
**1851 AG Heiloo (NL)**

(74) Representative: **EP&C**
**P.O. Box 3241**
**2280 GE Rijswijk (NL)**

(56) References cited:
EP-A2- 0 224 063      EP-B1- 2 310 760
DE-A1- 19 807 043      US-A- 5 953 883
US-A1- 2011 061 832

**Description**

The invention relates to the field of control of a climate, in particular of a thermal climate of an interior space. In particular, the invention is envisaged for application in controlling the thermal climate of an interior space of a building relative to the outdoor environment. The invention is also conceivable for other situations.

For example, a system is described in NL7810215 where fresh or used ventilating air flows to or from an interior space of a building through the permeable insulating wall.

In EP224063 a wall panel for an outer wall of a building is disclosed having an internal space between an insulated outer plate and a heat conductive inner plate. In the space a dividing plate is arranged. A heater is arranged in the lower end of the space. Heated air flows upward from the heater between the dividing wall and the heat conductive inner plate. In the embodiment of figure 7, holes are provided in an upper portion of the dividing wall, allowing the air to move to the other side of the dividing wall, returning downward between the dividing wall and the insulated outer plate. In the embodiment of figure 8, a fan is arranged above the top end of the dividing wall allowing the air to move to the other side of the dividing wall, returning downward between the dividing wall and the insulated outer plate.

The invention aims to provide an improved, or at least an alternative, building with a climate control system, as well as associated methods.

The invention provides for a building according to claim 1 provided with a climate control system for controlling a thermal climate of an interior space of the building, for example a heated interior space, relative to an outdoor environment. Herein, an insulation assembly of the climate control system is installed between the interior space and the outdoor environment. For example, said insulation assembly forms an external wall or a roof of the building, or is integrated therewith, said external wall or roof separating the interior space from the outdoor environment.

The insulation assembly comprises a gas-tight chamber with an outer wall, an inner wall at a distance therefrom, and a peripheral wall, wherein in the gas-tight chamber there is a permeable thermally-insulating wall that is permeable for a gaseous through-flow medium, said insulating wall delimiting an outer cavity with the outer wall and an inner cavity with the inner wall, said outer cavity and inner cavity being separated from one another by the permeable thermally-insulating wall.

The climate control system further comprises a circulation passage for the gaseous through-flow medium and a fan for the gaseous through-flow medium, said circulation passage forming a closed gas circuit with the inner cavity, the outer cavity, and the interposed thermally-insulating wall that is permeable for a gaseous through-flow medium.

The closed gas circuit is filled with a gaseous through-flow medium, preferably with a gas other than air, for example with carbon dioxide gas.

The fan for the gaseous through-flow medium is configured to effect movement of the gaseous through-flow medium through the permeable thermally-insulating wall, associated with circulation through the closed gas circuit.

The climate control system further comprises a heat exchanger that is configured to effect heat exchange between the gaseous through-flow medium circulating in the closed gas circuit on the one hand, and a stream of a heat-exchange medium separated therefrom on the other hand, when said fan is in operation.

With suitable operation of said fan, the insulation assembly insulates the interior space.

The insulation assembly insulates the interior space, in practical application more precisely the external wall or roof of said interior space in which or where it is placed against the insulation assembly or is integrated. This is done by utilizing a flow of the gaseous through-flow medium generated by the fan in the closed circuit, said gas flow going through the surface of the permeable thermally-insulating wall, from one cavity to the other cavity. This gas flow blocks, or at least inhibits, an opposite heat flow through this permeable thermally-insulating wall and the intended insulating effect is obtained thereby. It may then be advantageous for the thermally-insulating wall that allows through-flow of a gaseous through-flow medium to have a large and homogeneous permeable through-flow surface, preferably covering the whole roof of a building or the whole external wall of a building.

In some embodiments it may be necessary to adapt other aspects of the insulation assembly, such as the fan, to the through-flow area of this permeable thermally-insulating wall.

As will be explained in more detail hereunder, with an appropriate configuration the insulation assembly may be operated in various ways. The insulation assembly is able to insulate the interior space of the building and thus prevent undesirable heat or cold from outdoors coming in.

The insulation assembly according to the invention may, if desired, be produced especially effectively, at attractive capital cost, and with relatively simple materials.

For example, the invention makes it possible to insulate existing buildings thermally with a very high insulation value, which requires much less thickness compared to insulation of exterior walls with a thick layer of insulating material. This idea is also applicable to roofs of buildings, for example houses, wherein for example the existing roof is provided with a system according to the invention or the roof is replaced with a roof in which one or more insulation assemblies according to the invention are incorporated.

Owing to the presence of a closed gas circuit in the system according to the invention, problems such as condensation, accumulation of dirt, and mold formation in the permeable thermally-insulating wall may be avoided effectively. For example, this is in comparison with a system as described in NL7810215 where fresh or used ventilating air flows through the permeable insulating wall. Moreover, any fumes that are released from the material used for the permeable thermally-insulating wall, such as possibly a gas-permeable polystyrene, are confined in the gas circuit.

In one embodiment, the thermally-insulating wall that allows through-flow of a gaseous through-flow medium has uniform permeability for the circulating gas over its surface through which gas flows, preferably over at least a very large part thereof, for example at least over 75% of its surface.

The heat exchanger of the insulation assembly may recover heat or cold in order to minimize any heat or losses. Moreover, the heat exchanger may contribute to maintaining a temperature difference between the inner cavity and the outer cavity.

In some embodiments considered to be advantageous, not air, but another gas, is used as the circulating gaseous through-flow medium. For example, a gas or gas mixture with better insulating properties than air is used, such as argon, krypton or carbon dioxide ($CO_2$).

In an advantageous embodiment the circulating gaseous through-flow medium is carbon dioxide ($CO_2$), since it is a cheap gas that is easy to handle, for example also in the context of possible refilling of the system.

In a possible embodiment, the heat exchanger is a counterflow heat exchanger.

For example, the heat exchanger is configured to effect heat exchange between the gaseous through-flow medium circulating in the closed gas circuit when the fan is in operation, on the one hand, and a separate stream of ventilating air to or from the associated interior space, on the other hand.

In a possible embodiment of the insulation assembly in the building, the heat exchanger provides heat exchange with ventilating air for the interior space that is wholly or partially surrounded by the insulation assembly. In this case there is thus no contact between the gaseous through-flow medium in the closed circuit on the one hand and the ambient air on the other hand.

It is advantageous to have a thermally-insulating layer between the interior space on the one hand and the inner wall of the insulation assembly on the other hand. In conjunction with this, then preferably no thermally-insulating layer is present between the outer wall of the insulation assembly and the outdoor environment. In comparison with an embodiment in which the thermally-insulating layer is absent, through this measure, in at least some operating conditions, the temperature difference over the through-flow wall of the insulation assembly decreases. Then, with a view to heat recovery by means of the heat exchanger, operating the fan additionally so that a relatively stronger gas flow takes place through the through-flow wall, the insulating effect of the insulation assembly is then further increased. For example, a thermally-insulating layer is applied on, or placed against, the gas-tight inner wall of the insulation assembly. For example, the thermally-insulating layer is made from a (mineral) wool, a plastic foam, a chamber filled with insulating beads, expanded polystyrene, or the like. For example, this layer is expanded polystyrene with a thickness between 1 and 5 centimetres, for example about 2 centimetres.

In some embodiments of the insulation assembly in buildings, the heat exchanger is arranged for achieving heat exchange between the gaseous through-flow medium circulating in the closed gas circuit when the fan is in operation, on the one hand, and a separate stream of heating medium for the associated interior space on the other hand, for example a separate stream of water of a water-heating installation for the associated interior space or for example a separate air stream of a hot-air heating installation for the associated interior space.

For example, a part of the peripheral wall and/or a part of the inner wall and/or the outer wall, said part in conceivable embodiments delimiting a part of the circulation passage, are configured as a heat exchanger. For example, said part is made of heat-conducting material, for example a metal, wherein said metal part then also delimits a part of a ventilating air channel and keeps the circulating gas stream separate from the ventilating air stream.

In some embodiments the insulation assembly is a flat panel that has an internal gas-tight chamber and has an outer wall, an inner wall at a distance therefrom, and a peripheral wall, wherein there is, in the gas-tight chamber, a permeable thermally-insulating wall that is permeable for a gaseous through-flow medium, which delimits an outer cavity with the outer wall and an inner cavity with the inner wall, said outer cavity and inner cavity being separated from one another by the permeable thermally-insulating wall.

The invention further relates to a method for controlling an indoor climate of an interior space of a building according to claim 13.

In one embodiment, the insulation assembly is supplied already filled with the gaseous through-flow medium for insulating the existing building.

For example, the insulation assembly is provided with connectors for connecting the circulation pipe thereto, for example the connectors are made as self-closing quick couplings which open on effecting coupling with the circulation pipe.

In the case of buildings, such as houses, the roof is as a rule one of the largest sources of heat loss. The invention makes it possible to renovate or completely replace existing roofs, wherein the thickness of the roof is hardly any different, if at all, from that of the old roof. The high insulation value with relatively small thickness is also of advantage for external walls, for example in densely built-up towns, for example if an existing wall is covered with the insulation assembly (either on the inside or on the outside).

In one embodiment, the inner wall and/or the outer wall of the insulation assembly are made of plastic (sheet) material, optionally with a gas-tight barrier layer, for example a metal film, such as an aluminium film.

Optionally, the inner wall and/or the outer wall are of transparent material, for example of glass.

In one embodiment, an interior space of a building, for example of a house, is provided with a first insulation assembly according to the invention, wherein, in the insulation assembly, the gaseous through-flow medium flows through the permeable insulating wall from the inner cavity to the outer cavity and wherein, by means of the heat exchanger, heat is exchanged with fresh ventilating air flowing into the interior space. Moreover, it is provided with a second insulation assembly according to the invention wherein the gaseous through-flow medium flows through the permeable thermally-insulating wall from the outer cavity to the inner cavity and wherein, by means of the associated heat exchanger, heat is exchanged with the used ventilating air that flows from the interior space to the outside.

In another embodiment there is only one insulation assembly according to the invention, wherein, in the insulation assembly, the gaseous through-flow medium flows through the permeable insulating wall from the inner cavity to the outer cavity and wherein heat is exchanged with fresh ventilating air flowing into the interior space. For example, in conjunction with this, it may be provided that the used ventilating air is used in a heat pump, so that the heat of the ventilating air may be recovered. With a central arrangement of said heat pump, for example in the loft, it may be advantageous for the discharge of used ventilating air to be central as well, which reduces installation and maintenance costs.

When designing an insulation assembly according to the invention, the through-flow area of the thermally-insulating wall should be taken into account in combination with the gas flow through said wall. Thus, for example, it may be a disadvantage to make the gas through-flow area of the insulation assembly twice as large, since then the velocity of the gaseous through-flow medium through the insulating wall is halved, resulting in a lower Pe number. That might for example lead to approx. 3 times more effective conduction and therefore more heat loss by conduction. To prevent this, the fan will have to create a higher gas flow velocity. The system provides optimum insulation when through-flow is possible through a gas-permeable surface of the insulation assembly. In other words the insulation value of the insulation assembly is lower at points where the thermally-insulating wall that allows through-flow of a gaseous through-flow medium does not allow through-flow. It may then be desirable to make the through-flow area as large and uniform as possible and adapt the speed of the fan to this in order to generate a desired Péclet number over the whole insulation assembly. The best configuration must be selected, depending on the type of interior space, the outdoor climate and the user's preference.

The thermal velocity is a diffuse physical quantity, which depends on the average path length and the velocity of the molecules in a medium and may be determined from the Péclet number Pe, which is greater than 1 if the velocity of the medium is greater than the average thermal velocity.

For example, in some embodiments and operational states of the system according to the invention the Pe number is greater than 0, preferably greater than 3.

The Pe number is determined from the velocity of the gaseous through-flow medium v, the thickness of the permeable insulating wall I, the specific heat Cp, the specific gravity $\rho_g$, and the thermal conductivity $\lambda_g$ of the through-flow medium:

$$Pe = v \, I \, Cp \, \rho_g / \lambda_g.$$

Depending on the thickness of the permeable insulating wall, for example through-flow velocities are 0.1 - 4 mm/s and thus 0.1 - 4 l/s per m$^2$ of the through-flow surface, for example between 0.1 and 0.5 mm/s. Here, the through-flow surface is formed by the surface of the insulating wall, which is substantially perpendicular to the direction of flow of the medium through the insulating wall.

A theoretical consideration is that, in operational states, a superadiabatic property of the flow of the through-flow medium is relevant, so that an oppositely directed flux of conduction heat through the insulating wall is blocked: the heat or cold cannot flow against the flow. Now if the gaseous medium flows from hot to cold, a heat front develops, which blocks an oppositely directed flux of cold. If, however, the flow of the medium is from cold to hot, a cold front develops, which blocks an opposite heat flux. The blocking of a conduction heat flux through the wall by means of an opposite superadiabatic flow through it may perhaps be compared to the breaking of the sound barrier by a supersonic flow.

On flowing through the insulating wall, the circulating gaseous medium absorbs heat or cold respectively, depending on whether the interior space to be insulated is warmer or colder than the environment. This heat or cold may be recovered in the heat exchanger, whereby the heat or cold may for example be utilized for heating or cooling the interior space to be insulated, for example by means of a heating and/or cooling system of a climate control system.

By blocking a conduction heat flux through the insulation assembly, loss of heat or cold in the interior space by conduction through for example a wall to the surroundings is almost completely eliminated. Because the heat absorbed by the medium during flow can also be recovered, when using this insulation assembly, for example as a component of a climate control system, for maintaining a temperature difference between the space and the environment, energy is only required for compensating said recovery losses.

The thermally-insulating wall preferably has uniform permeability for the circulating gas over its surface through which gas flows, preferably over at least a largest part thereof, for example at least over 75% of its surface.

Examples of permeable insulating wall materials are wool, for example of glass fibre, rock fibre, animal and vegetable fibres; porous plates, for example of plastic, perforated panels, for example perforated sandwich panels, and walls assembled from insulating beads or granules, which are confined or clamped between porous plates and/or porous films.

In practice, for example rock wool, glass wool, other mineral or organic wool, bundles of fibres, open-cell plastic foam or other open-cell foam, insulating beads or granules optionally packaged in perforated films, may be used. Stacked perforated films of various materials with a mutual distance from 1 to 20 mm are also possible and shutters of various materials.

Especially preferably, the thermally-insulating wall through which the gaseous through-flow medium is able to flow is made of expanded polystyrene, EPS.

For example, permeable EPS material is used with a density between 15 and 40 kg/m$^3$, preferably between 15 and 25 kg/m$^3$.

If, by way of example, open EPS is used as material for the permeable insulating wall, then at identical insulation thickness (for example l=10 cm) and through-flow velocity (for example v= 0.5 mm/s) the Pe number and the effective thermal conductivity $\lambda_s$, according to $\lambda_s = \lambda_o \exp(-0.5Pe)$, with $\lambda_o$ = thermal conductivity of EPS at v=0, with the following through-flow gases:

| Gas | Cp J/kgK | $\rho_g$ kg/m$^3$ | $\lambda_g$ W/mK | Pe | $\lambda_o$ W/mK | $\lambda_s$ W/mK |
|---|---|---|---|---|---|---|
| Air | 1000 | 1.200 | 0.0240 | 2.5 | 0.038 | 0.010800 |
| Argon | 520 | 1.782 | 0.0177 | 2.6 | 0.028 | 0.007570 |
| Krypton | 248 | 3.749 | 0.0043 | 10.8 | 0.006 | 0.000003 |
| CO$_2$ | 846 | 1.980 | 0.0160 | 5.2 | 0.025 | 0.001849 |

Argon is somewhat better than air, but its use does not seem worthwhile economically. Owing to the high Pe number, krypton gives very low effective heat conduction, but in practical terms this does not really seem necessary, and in addition krypton is very expensive.

Carbon dioxide, $CO_2$, is much more favourable than air, and is very cheap.

In a possible embodiment, the pressure of the gas in the closed circuit is somewhat less than atmospheric pressure, so that for example if there is any leakage, no $CO_2$ can come into the interior space.

Calculations indicate that the effective heat conduction with $CO_2$ is more than 3 times better than for stationary krypton in the insulation assembly, which demonstrates the excellent insulation of an inexpensive insulation assembly according to the invention with $CO_2$ in the closed gas circuit.

Regarding the velocity of the gaseous through-flow medium, the choice must be such that the heat losses by conduction are approximately equal to the heat losses by ventilation, if the system is used in combination with heat exchange with ventilating air. At high velocity, the heat losses by ventilation are high and the losses by conduction are low, and the losses may be made equal through the choice of the through-flow velocity.

In an appropriate embodiment, the system according to the invention may be operated based on one or more of the following possibilities in a situation of an interior space that is covered wholly or partly or on the other hand screened with the insulation assembly.

First possibility

The air in the interior space is, as desired, warmer than the outdoor environment and then the warm gaseous through-flow medium, driven by the fan, flows through the permeable insulating wall from the inner cavity to the outer cavity and cools down in the process. Then the gas flows via the heat exchanger back to the inner cavity and in this heat exchanger is warmed with the used ventilating air flowing to the outside, which cools, so that this heat is recovered.

In one embodiment, with a gas flow with a Pe number greater than 1, a heat front develops in the permeable insulating wall, which blocks the heat flow of the conduction heat, which is directed to the outside as the Pe number increases, asymptotically to zero. From experimental measurements, it appears that at a Pe number of 3 there is usually ample blocking. Then only the heat that is present in the ventilating air is lost, which in practice is always the case, but the interior space loses hardly any heat by conduction.

## Second possibility

The air in the interior space is, as desired, warmer than the outdoor environment and then cold gaseous through-flow medium, driven by the fan, flows through the permeable insulating wall from the outer cavity to the inner cavity and warms up in the process. Then the gaseous through-flow medium flows via the heat exchanger back to the outer cavity and in the process is cooled by means of the heat exchanger with the inward-flowing fresh ventilating air, which warms up, so that this heat is recovered.

In one embodiment, at a Pe number greater than 1, a cold front develops in the permeable insulating material, which blocks the heat flow of the conduction heat, which is directed to the outside as the Pe number increases, asymptotically to zero. From experimental measurements, it appears that at a Pe number of 3 there is usually ample blocking. Then the ventilating air is warmed up, which is always the case, but the interior space loses hardly any heat by conduction.

## Third possibility

The air in the interior space is, as desired, colder than the outdoor environment and then cold gaseous through-flow medium, driven by the fan, flows through the permeable insulating wall from the inner cavity to the outer cavity and warms up in the process. Then the gas flows via the heat exchanger back to the inner cavity and in the process is cooled via the heat exchanger with the used ventilating air flowing to the outside, which warms up, so that this heat is recovered.

In one embodiment, at a Pe number greater than 1, a cold front develops in the permeable insulating material, which blocks the heat flow of the conduction heat, which is directed inwards as the Pe number increases, asymptotically to zero. From measurements, it appears that at a Pe number of 3 there is usually ample blocking. During this, it is almost only the cold present in the ventilating air that is lost, which is always the case, but the interior space loses hardly any cold by conduction.

## Fourth possibility

The air in the interior space is, as desired, colder than the outdoor environment and then the warm gaseous through-flow medium, driven by the fan, flows through the permeable insulation from the outer cavity to the inner cavity and cools down in the process. Then the through-flow medium flows via the heat exchanger back to the outer cavity and in the process is warmed up via the heat exchanger with the inward-flowing fresh ventilating air, which cools, so that this cold is recovered.

In one embodiment, at a Pe number greater than 1, a heat front develops in the permeable insulating wall, which blocks the heat flow of the conduction heat, which is directed inwards as the Pe number increases, asymptotically to zero. From experimental measurements, it appears that at a Pe number of 3 there is usually ample blocking. In this process the ventilating air is cooled, which is always the case, but the interior space loses hardly any cold by conduction.

In a possible embodiment, a heat pump is connected directly to the closed gas circuit, wherein the gaseous through-flow medium flows through the cold part of the heat pump. The recovered conduction heat is then obtained directly by the heat pump from the gaseous through-flow medium and the cooled gaseous through-flow medium is led back to the closed gas circuit. The heat obtained may then for example be utilized for heating the interior space or for other heating applications. Because an extra counterflow heat exchanger is no longer required for exchange with the ventilation heat, the system becomes simpler and less expensive. Because there is no direct interaction with the ventilating air, the ventilation heat can be recovered separately with an inexpensive balancing fan. On the other hand the heat pump must pump round more heat and must have a higher capacity. In addition, the through-flow surface is now twice as large as in the first embodiment and therefore the effective insulation may be about 3 times poorer. The choice then depends on the desired indoor climate, the outdoor climate and the user's preference. With the order reversed, this embodiment may also be used for cooling.

In a possible embodiment, a, possibly inexpensive, light collector is provided on the lit side of a transparent insulation assembly according to the invention and/or provided on the shadow side with a not necessarily transparent insulation assembly of a system according to the invention. In each or both systems, an operational state is then provided in which the through-flow medium in the insulation assembly flows towards the collector, and thus to the cavity adjacent to the collector. The collector converts light (sunlight) to heat. A collector medium flows through the light collector, and is on the one hand warmed by the heat of the collector and on the other hand by the heat of the gaseous through-flow media in the insulation assemblies.

The through-flow media flow at ambient temperature through the permeable insulating wall to the light collector and warm up in the process. At a Pe number greater than 1, a cold front develops and the conduction heat is blocked asymptotically to 0 with an increasing Pe number. Hardly any of the heat of the collector can reach the outside, but is largely given up to the collector fluid and the through-flow media.

Preferably the through-flow media flow in the inner cavities along the collector to the edge, where the collector medium within the collector flows inwards. Towards this edge, the collector becomes increasingly colder to somewhat above the temperature at which the collector medium comes into the collector. The through-flow media will cool in the process, because they give up their heat to the collector medium via the collector wall. Because this is countercurrent heat exchange, the efficiency of this heat exchange approaches 100% and the through-flow media have a somewhat higher temperature than the incoming collector medium. At this low temperature, the through-flow media are led back to their outer cavities of the closed insulation assembly and the cycles are closed. Because there is hardly any heat exchange with the environment, collector efficiency is high, even at very low ambient temperatures and at low light intensity. Performances which are only possible with very complex and expensive collectors.

If the incoming collector medium is warmer or colder than the exterior space, then the through-flow media in the outer cavities are also warmer or colder than the exterior space and this may be used to control the climate of the exterior space, such as a conservatory or a greenhouse, or alternatively the collector medium may be heated to high temperatures and thus utilized.

In the figures:

Fig. 1 is a schematic representation of a building provided with an insulation assembly according to the present invention,

Fig. 2 is a schematic representation of a second embodiment of a building provided with an insulation assembly according to the present invention,

Fig. 3 is a schematic representation of a third embodiment of a building provided with an insulation assembly according to the invention,

Fig. 4 is a schematic representation of a fourth embodiment of an insulation assembly for a building according to the present invention.

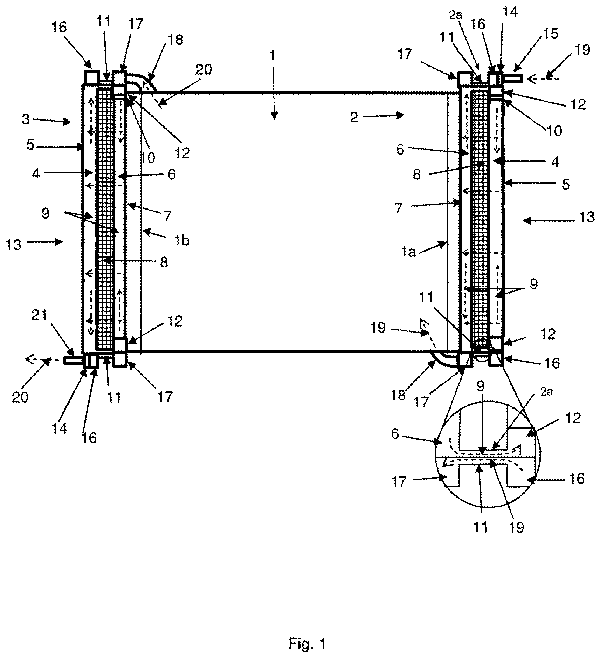

Fig. 1 shows schematically, partly in cross-section, an embodiment example of a building provided with insulation assemblies according to the present invention.

The building, for example a house, has an interior space 1, heated by means that are not shown, for example a central heating system. Said space 1 is shown here with two outermost walls 1a, 1b of the building, which separate the space 1 from the outdoor environment.

An insulation assembly 2 according to the invention is applied against the outside of, or in a variant integrated in, the external wall 1a.

An insulation assembly 3 according to the invention is applied against the outside of, or in a variant integrated in, the external wall 1b.

Consequently the insulation assemblies 2, 3 enclose the interior space 1 partially.

In this representation it is provided that the insulation assembly 2 forms part of a system that exchanges heat with fresh ventilating air that is admitted from the outdoor environment to the interior space 1.

In this representation it is provided that the insulation assembly 3 forms part of an insulation system that exchanges heat with used ventilating air that is led away from the interior space to the outdoor environment.

The insulation assembly 2 has a gas-tight chamber with an outer wall 5, an inner wall 7 at a distance therefrom, and a peripheral wall 2a, wherein a permeable thermally-insulating wall that is permeable for a gaseous through-flow medium 8 is present in the gas-tight chamber and delimits an outer cavity 4 with the outer wall 5 and an inner cavity 6 with the inner wall 7.

The outer cavity 4 and the inner cavity 6 are separated from one another by the permeable thermally-insulating wall 8.

The thermally-insulating wall 8 may have parallel principal planes.

The inner wall 7 and outer wall 5 are preferably flat and parallel to one another.

The thermally-insulating wall 8 may be parallel to the inner wall and the outer wall, but may also be at an angle, for example so that the cavities have a conical shape in vertical cross-section.

Spacers may be provided between the thermally-insulating wall 8 on the one hand and the inner wall and/or the outer wall on the other hand, for example thermal insulating spacers that prevent a cold bridge.

The peripheral wall 2a may be configured to provide thermal insulation and prevent a cold bridge.

The peripheral wall 2a may be a load-bearing perimeter frame, for example with innermost and outermost perimeter frame parts separated from one another by thermal insulation.

The thermally-insulating wall 8 may be made up from parts, for example from parts of open-cell or permeable expanded polystyrene, EPS. For example, permeable EPS material is used with a density between 15 and 40 kg/m$^3$, preferably between 15 and 25 kg/m$^3$, for example between 15 and 18 kg/m$^3$.

The system that the insulation assembly 2 forms part of further comprises a circulation passage and a fan 10 for the gaseous through-flow medium (which is designated with the reference number 9).

In its entirety, the circulation passage forms a closed gas circuit for said gas 9 with the inner cavity, the outer cavity, and the interposed thermally-insulating wall 8 that is permeable for a gaseous through-flow medium.

The gas 9 is preferably carbon dioxide gas.

The fan (or fans) for the gaseous through-flow medium is (are) arranged for providing movement of the gaseous through-flow medium through the permeable thermally-insulating wall 8, with associated circulation through the closed gas circuit.

In practice, one or more electrically driven fans 10 may be used in the insulation assembly. For example, the fans 10 are of small format, for example such as are used for cooling desktop computers.

In the embodiment of the insulation assembly shown, there is a very simple counterflow heat exchanger 11, which is arranged for achieving, on operation of the fan 10, heat exchange between the gaseous through-flow medium circulating in the closed gas circuit on the one hand and a separate stream of heat exchange medium, here in the case of assembly 2, incoming fresh ventilating air for the interior space 1, on the other hand.

During operation of the insulation assembly 2, gaseous through-flow medium 9, driven by a fan 10 for the through-flow medium, flows through the permeable insulation 8 to the inner cavity 6.

In the insulating wall 8 that is permeable for the gas, the gaseous through-flow medium 9 is warmed by the conduction heat that will flow from the heated interior space 1 to the colder exterior space 13. In an operational state in which the Pe number is greater than 1, this flow is blocked asymptotically with Pe to 0.

Then the warmed through-flow medium 9 flows from the inner cavity 6 to the heat exchanger 11.

In this example it is provided that the heat exchanger 11 is applied on, optionally integrated with, the peripheral wall 2a of the assembly 2.

From the heat exchanger 11, gas flows through a tube 12 to the fan 10 and from there to the outer cavity 4. The cycle of the gaseous through-flow medium 9 is thus a closed cycle.

In this example, fresh ventilating air 19 from the exterior space 13 is pumped by a ventilating air fan 14, optionally equipped with a filter, via a ventilation inlet 15 into a tube 16. In this example said tube 16 runs along an edge of the insulation assembly 2 on the outside thereof. A further tube 17 runs parallel thereto along the same edge of the insulation assembly 2, but on the inside. Between tubes 16, 17 there is the heat exchanger 11, which exchanges heat between the gas that circulates in the closed circuit of the assembly 2 through the wall 8 and between the inner cavity 6 and the outer cavity 4 on the one hand and the ventilating air that flows from tube 16 to tube 17 and from there to the interior space 1.

In this example, the heat exchanger 11 has a simple configuration with a heat-conducting element, here a plate, for example a metal plate, between the two media streams. Said plate may for example be located in the peripheral wall 2a of the insulation assembly 2, and for example form a part thereof.

Thus, the fresh ventilating air 19 flows through the heat exchanger 11 and then via tube 17 and tube 18 to the interior space 1.

In the heat exchanger 11, the fresh ventilating air 19 is warmed and the through-flow medium 9 is cooled for example to the temperature of the exterior space 13 as far as possible, so that there is barely a temperature difference across the outer wall 5 and hardly any heat is lost to the outside.

The insulation assembly 3, which belongs here to the used ventilating air stream, has in essence the same structure as assembly 2 and therefore corresponding components are designated with the same reference number.

The insulation assembly 3 is provided so that the gaseous through-flow medium 9 driven by a fan 10 for the through-flow medium flows from the inner cavity 6 through the permeable insulating wall 8 to the outer cavity 4.

In the permeable insulating wall 8, the gaseous through-flow medium 9 is cooled, wherein the heat recovered from the ventilating air by means of the system with insulation assembly 3 is lost. In a possible operational state, at a Pe number greater than 1, the conduction heat is blocked asymptotically with Pe to 0.

After passing through the wall 8, the through-flow medium 9 flows via the outer cavity 4 to the heat exchanger 11.

The used ventilating air, derived from the interior space 1, flows, driven by ventilating air fan 14, from the interior space 1, via the ventilating air lead-through 18 to tube 17 and is then distributed and brought to the heat exchanger 11, where the used ventilating air 20 is cooled with the gaseous through-flow medium 9, which is warmed thereby. The gaseous through-flow medium 9 is then preferably warmed almost to the temperature of the interior space 1, so that there is hardly any temperature difference across the inner wall 7 and hardly any heat is lost. The cooled used ventilating air 20 then flows via the collecting pipe 16 to the ventilating air fan 14 and via the ventilating air discharge 21 to the exterior space 13. In this way, depending on the Pe number of the through-flow medium 9 and the efficiency of the heat exchanger 11, almost only the recovered heat from the ventilating air 20 is lost, which is always the case without extra measures, such as heat recovery.

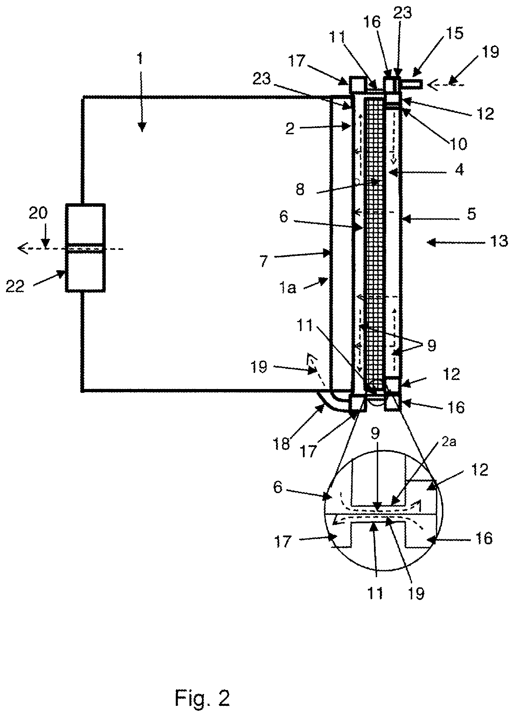

Fig. 2 shows a schematic cross-section of a second embodiment of a building with a system according to the present invention.

In this example, a heated interior space 1 is wholly or partly surrounded by one or more insulation assemblies 2, which are preferably used here for warming the fresh ventilating air that is admitted into the space 1.

The inner wall 7 may be applied against an exterior wall of the building that has an interior space 1, for example a wall made of concrete or brick. In a possible variant, said wall is part of the internal wall, or forms said inner wall 7. The inner wall 7 of the insulation assembly may optionally be a gas-tight flexible membrane, for example a single-layer or multilayer membrane with a gas-tight barrier layer, for example a gas-tight metal film, which is applied in a suitable manner against a structural wall.

A gaseous through-flow medium 9 flows, driven by a fan 10 for the through-flow medium, through the permeable insulating wall 8 to the outer cavity 4. In the permeable insulating wall 8 the through-flow medium 9 is warmed by the conduction heat that will flow from the warm interior space 1 to the colder outdoors. In a possible operational state, said flow, at a Pe number greater than 0, is also blocked asymptotically with Pe to 0.

Then the through-flow medium 9 flows to the heat exchanger 11, and then it flows through the collecting pipe 12 back to the fan 10 for the through-flow medium and to the outer cavity 4, and the cycle of the through-flow medium 9 is thus closed.

Fresh ventilating air 19 is pumped from the exterior space 13 by means of the intake fan 14 via the ventilation inlet 15 into a distribution pipe 16. Thus distributed, the fresh ventilating air 19 flows through the heat exchanger 11 and then via the collecting pipe 17 and the lead-through pipe 18 to the interior space 1.

In the heat exchanger 11, the fresh ventilating air 19 is warmed and the through-flow medium 9 is cooled for example to the temperature of the exterior space 13 as far as possible, so that there is barely a temperature difference across the outer wall 5 and hardly any heat is lost to the outside.

In this example in Fig. 2, the used ventilating air 20 is led away with a heat pump 22, which recovers the heat that is present in the used ventilating air 20. The recovered heat may for example be used to warm the inner wall 7 with water heated by the heat pump 22 and convey this in the tubes 23 along the inner wall 7. In this case, owing to the heated inner wall, the real-feel temperature in the interior space 1 is higher and the temperature in the interior space 1 may be lower.

In possible embodiments, the inner wall 7 may also be used as a heat buffer, so that cold peaks may be absorbed better without increased power, so that the heat pump can have a lower design output, whereas the heating tubes 23 may be pre-installed inexpensively in the insulation assembly 2. Further possible benefits to be obtained are that the heat in the used ventilating air 20 is recovered and that discharge, including condensate discharge, can take place centrally, reducing installation and maintenance costs.

A possible disadvantage could be that, on account of the two times larger inflow area of the permeable insulating wall 8, the velocity of the through-flow medium 9 is halved (the outflow insulation assembly 3, see Fig 1, is no longer present) and so therefore is the Pe number, so that the effective thermal conductivity becomes approx. 3 times greater, and so therefore does the heat loss by conduction. To compensate this, for example the fan may increase the flow velocity so as to keep the Péclet number above 1. The choice of whether to use a heat pump 22 will depend on the type of interior space 1, the climate in the exterior space 13 and the user's preference.

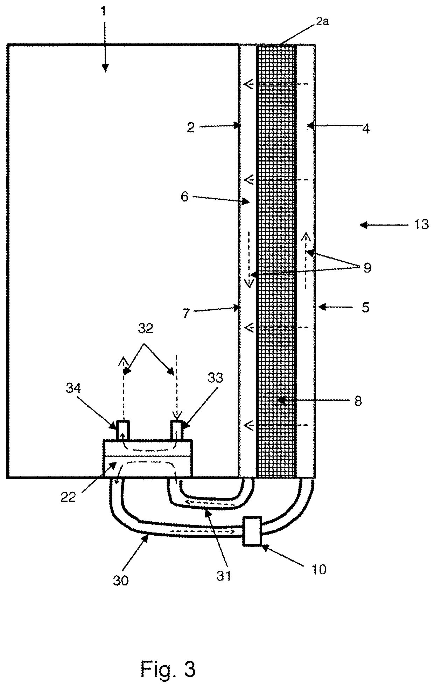

Fig. 3 shows a schematic cross-section of a third embodiment of a building with a system according to the present invention.

A heated interior space 1 is wholly or partly surrounded by one or more insulation assemblies 2, for example by applying the one or more assemblies 2 in or against an external wall and/or roof, or optionally floor, of the building that forms the interior space 1.

Driven by a fan 10 for the through-flow medium, the gaseous through-flow medium 9 flows from the cold part of a heat pump 22, via a gas feed-through line 30 to the outer cavity 4. From the outer cavity 4, the gas flows through the surface of the permeable insulating wall 8 to the inner cavity 6. In the permeable insulating wall 8, the through-flow medium 9 is warmed by the conduction heat, which will flow from the warm interior space 1 to the colder outer cavity 4.

In a possible operational state wherein Pe>0, the conduction heat is blocked asymptotically with Pe to 0.

Then the through-flow medium 9 flows via a gas feed-through line 31 back to the cold part of heat pump 22, which cools the through-flow medium 9. Then the cooled through-flow medium 9 flows back to the outer cavity 4 and the cycle is closed.

The heat pump 22 cools the through-flow medium 9, for example down to a temperature that is lower than the medium in the exterior space 13. As a result, the through-flow medium 9 will abstract extra heat from the exterior space 13. In the heat pump 22, this extra heat and the recovered heat from the conduction heat are given up to the interior space 1, by means of the medium 32 warmed by the warmed part of heat pump 22, which is given up via the outlet 33 of the heat pump 22 and, after cooling, flows back to the inlet 34 of the warmed part of heat pump 22.

The heating medium 32 may for example be water, which for example heats the interior space 1 with floor heating or radiators, or hot air, etc. Part of this heat is reused to warm the through-flow medium 9 in the insulation assembly 2. Another part will be used to heat the interior space 1. This latter part coincides with the extra heat that is abstracted from the exterior space 13. On account of the high COP of the heat pump 22, the pumping-round of the through-flow medium 9 and the warming and cooling of the through-flow medium involve little energy expenditure. It is then conceivable that the conduction heat of the insulation assembly 2 is blocked asymptotically to 0.

Furthermore, heat that was abstracted from exterior space 13 is also still available for heating the interior space 1, which may be used to warm the ventilating air and to compensate other heat leakage.

If it is desirable for the interior space 1 to be cooled, the insulation assembly 2 may be used in the reverse direction and the through-flow medium 9 should have a higher temperature than the exterior space 13 in order to give up the extra heat from the interior space 1 to the exterior space 13. The heat pump 22 should then also be reversed, so that the cold part is connected to the interior space 1 and the heating part to the outer cavity.

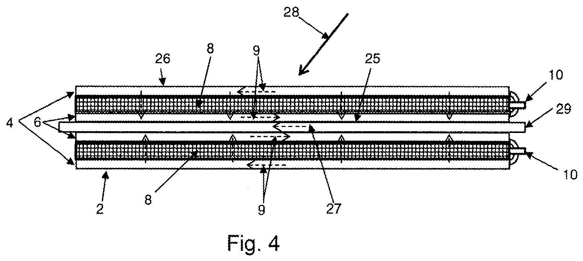

Fig. 4 shows a schematic cross-section of a fourth embodiment of an insulation assembly for a building according to the present invention.

In this embodiment example, the insulation assembly of the invention is combined with a light collector 25 through which a collector medium 27 flows, for example a liquid, for example water and/or glycol, for example based on a collector medium pump that is not shown.

On the sunlit side, in this example the light collector 25 is surrounded wholly or partly by an insulation assembly 26 that is (partly) transparent to sunlight, which requires the walls 5, 7 and the insulating wall 8 thereof to be translucent. For example, the insulating wall 8 is made of sheets of translucent plastic film to form an insulating wall 8 that is permeable for the gaseous through-flow medium.

The collector medium 27 flows through the light collector 25, here from right to left, and when illuminated is warmed by incident (sun)light 28.

On the side of the light collector 25 opposite the lit side, i.e. on the shadow side, an insulation assembly 2 is provided, which in one embodiment is not transparent, but optionally may also be transparent.

Thus, in Fig. 4 a light collector 28 is combined in a sandwich construction with two insulation assemblies according to the invention, at least one of which is a translucent or transparent insulation assembly.

In another variant the light collector is combined with only one insulation assembly, for example with an insulation assembly applied on the shadow side.

In a possible operational state of the system in Fig. 4, it is provided that a gaseous through-flow medium 9, driven by the fan 10 for the through-flow medium, flows through the outer cavity 4 of the transparent insulation assembly 26. In the outer cavity 4, the through-flow medium is distributed over the surface of the permeable insulating wall 8 and is then conveyed to the inner cavity 6. As a result, the through-flow medium 9 is warmed by the heat that will flow from the light collector 25 to the exterior space 13. In a possible operational state with a Pe number greater than 0, this heat is blocked by the through-flow medium 9 asymptotically with the Pe number to 0.

In the inner cavity 6, the through-flow medium 9 flows back to the fan 10 for the through-flow medium and the flow cycle is closed. Flowing into the inner cavity 6, the through-flow medium cools down on the collector medium 27, which flows through the light collector 25, with an efficiency that approaches 100% asymptotically. Thus, arriving at the fan 10 for the through-flow medium, the through-flow medium has almost the temperature of the incoming collector medium 29. If the incoming collector medium 29 is colder than the exterior space 13, it will be cooled by the through-flow medium 9 in the outer cavity, which may be favourable if this is needed in the exterior space 13. If the temperature of the incoming collector medium 29 is warmer than the exterior space 13, the exterior space 13 is heated, which may be favourable if there is a need for this. In this way, the exterior climate 13 may be regulated with the temperature of the incoming collector medium 29, whereas the outgoing collector medium 27 can be warmed to high temperatures and may be used for example for hot water, storage of heat for later use, production of steam, generation of electric current, etc.

In the insulation assembly 2, which is placed on the shadow side of the light collector 25, a through-flow medium 9, driven by a fan 10 for the through-flow medium and distributed over the surface of the permeable insulation 8, flows to the inner cavity 6 and is warmed by the heat of the light collector 25, which will flow to the exterior space 13. Optionally, this heat is blocked by the through-flow medium 9 asymptotically with the Pe number to 0.

In the inner cavity 6 the through-flow medium 9 flows back to the through-flow fan 10 and the flow cycle is closed. Through-flow medium 9 also cools down again in the inner cavity 6 on the collector medium 27, which flows through the light collector 25 with an efficiency that approaches 100% asymptotically. Thus, on arriving at the fan 10 for the through-flow medium, the through-flow medium 9 has almost the temperature of the incoming collector medium 29. If the incoming collector medium 28 is colder than the exterior space 13, this will be cooled by the through-flow medium 9 in the outer cavity 4, which may be favourable if there is a need for this in the exterior space 13. If the temperature of the incoming collector medium 29 is warmer than the exterior space 13, then the exterior space 13 is heated, which may be favourable if there is a need for this. In this way, the exterior climate 13 may be regulated with the temperature of the incoming collector medium 29. Optionally, the insulation assembly 2 on the shadow side of the light collector 25 may be replaced with any kind of insulation. In that case, if desired, the climate control in the exterior space 13 is less (cost-) effective and probably so is the insulation.

**Claims**

1. Building provided with a climate control system for controlling a thermal climate of an interior space (1) of the building relative to an outdoor environment, for example of a heated interior space (1) relative to an outdoor environment, wherein an insulation assembly (2,3,25,26) of the climate control system is installed between the interior space (1) and the outdoor environment, for example wherein the insulation assembly forms an external wall or a roof, or is integrated therewith, said external wall or roof separating the interior space from the outdoor environment, wherein the insulation assembly (2,3,25,26) comprises:

- a gas-tight chamber with an outer wall (5), an inner wall (7) at a distance therefrom, and a peripheral wall (2a), wherein a permeable thermally-insulating wall (8) that is permeable for a gaseous through-flow medium, which delimits an outer cavity (4) with the outer wall and an inner cavity (6) with the inner wall, is present in the gas-tight chamber, said outer cavity and inner cavity being separated from one another by the permeable thermally-insulating wall (8),

wherein the climate control system further comprises:

- a circulation passage (12) for the gaseous through-flow medium and a fan (10) for the gaseous through-flow medium, said circulation passage forming a closed gas circuit with the inner cavity, the outer cavity, and the interposed permeable thermally-insulating wall (8) that is permeable for a gaseous through-flow medium,

wherein the closed gas circuit is filled with a gaseous through-flow medium (9), preferably with a gas other than air, for example with carbon dioxide gas, wherein the fan (10) for the gaseous through-flow medium is arranged for providing, on circulation through the closed gas circuit, movement of the gaseous through-flow medium through the surface of the permeable thermally-insulating wall (8), from one cavity to the other cavity, wherein this gas flow blocks, or at least inhibits, an opposite heat flow through the permeable thermally-insulating wall,

- a heat exchanger (11), which is configured to effect, when said fan (10) is in operation, heat exchange between the gaseous through-flow medium circulating in the closed gas circuit (9) on the one hand and a stream of a heat-exchange medium separated therefrom (19,20; 33,34) on the other hand.

2. Building according to claim 1, wherein the permeable thermally-insulating wall (8) has uniform permeability for the circulating gaseous through-flow medium over a surface thereof through which gas flows, preferably over at least a largest part thereof, for example at least over 75% of that surface.

3. Building according to claim 1 or 2, wherein a thermally-insulating layer is present between the interior space on the one hand and the inner wall of the insulation assembly on the other hand, for example applied beforehand on the inner wall of the insulation assembly, said insulating layer being made for example of wool, in particular mineral wool, plastic foam, insulating beads, expanded polystyrene, or the like.

4. Building according to one of claims 1 - 3, wherein the permeable thermally-insulating wall (8) and the fan (12) are configured so as to achieve a Péclet number Pe greater than 1, preferably greater than 3, wherein the Pe number is determined from the velocity of the gaseous through-flow medium v, the thickness of the permeable insulating wall l, the specific heat Cp, the specific gravity $\rho_g$, and the thermal conductivity $\lambda_g$ of the through-flow medium:

$$Pe = v \, l \, Cp \, \rho_g / \lambda_g.$$

5. Building according to one or more of claims 1 - 4, wherein the heat exchanger (11; 22) is configured to effect, when the fan (12) is in operation, heat exchange between the gaseous through-flow medium circulating in the closed gas circuit on the one hand and a separate stream of ventilating air to or from the associated interior space of the building on the other hand.

6. Building according to one or more of claims 1 - 5, wherein the heat exchanger (11; 22) is configured to effect, when the fan (12) is in operation, heat exchange between the gaseous through-flow medium circulating in the closed gas circuit on the one hand and a separate stream of heating medium for the associated interior space on the other hand, for example a separate stream of water of a water-heating installation for the associated interior space or for example a separate air stream of a hot-air heating installation for the associated interior space.

7. Building according to one or more of claims 1 - 6, wherein a part of the peripheral wall (2a) delimits a part of the circulation passage (12) and is configured as a heat exchanger, for example wherein said part further delimits a part of a ventilating air channel for heat exchange between the through-flow medium and the ventilating air.

8. Building according to one or more of claims 1 - 7, wherein the insulation assembly further comprises a light collector, for example in a sandwich construction combined with a second insulation assembly according to one or more of claims 1 - 7, wherein at least one of the insulation assemblies is a translucent or transparent insulation assembly.

9. Building according to claim 8, wherein a collector medium (27) can flow through the light collector, which exchanges heat with the gaseous through-flow medium (9).

10. Building according to one of claims 1 - 9, wherein the insulation assembly (2) is a flat panel that has an internal gas-tight chamber and an outer wall (5), an inner wall (7) at a distance therefrom, and a peripheral wall (2a), wherein a permeable thermally-insulating wall (8) for a gaseous through-flow medium, which delimits an outer cavity with the outer wall (4) and an inner cavity with the inner wall (6), is present in the gas-tight chamber, said outer cavity (4) and inner cavity (6) being separated from one another by the permeable thermally-insulating wall (8).

11. Building according to one of claims 1 - 10, wherein the gaseous through-flow medium is carbon dioxide gas.

12. Building according to one of claims 1 - 11, wherein the thermally-insulating wall (8) through which the gaseous through-flow medium is able to flow is made of expanded polystyrene that is permeable for the gaseous through-flow medium.

13. Method for controlling a thermal climate of an interior space (1) of a building relative to an outdoor environment, for example of a heated interior space (1) relative to an outdoor environment, wherein an insulation assembly (2,3,25,26) of the climate control system is installed between the interior space (1) and the outdoor environment, for example wherein the insulation assembly forms an external wall or a roof, or is integrated therewith, said external wall or roof separating the interior space from the outdoor environment, wherein the insulation assembly (2,3,25,26) comprises:

- a gas-tight chamber with an outer wall (5), an inner wall (7) at a distance therefrom, and a peripheral wall (2a), wherein a permeable thermally-insulating wall (8) that is permeable for a gaseous through-flow medium, which delimits an outer cavity (4) with the outer wall and an inner cavity (6) with the inner wall, is present in the gas-tight chamber, said outer cavity and inner cavity being separated from one another by the permeable thermally-insulating wall (8),
wherein the climate control system further comprises:

- a circulation passage (12) for the gaseous through-flow medium and a fan (10) for the gaseous through-flow medium, said circulation passage forming a closed gas circuit with the inner cavity, the outer cavity, and the interposed permeable thermally-insulating wall (8) that is permeable for a gaseous through-flow medium,

wherein the closed gas circuit is filled with a gaseous through-flow medium (9), preferably with a gas other than air, for example with carbon dioxide gas,
wherein the fan (10) for the gaseous through-flow medium is arranged for providing, on circulation through the closed gas circuit, movement of the gaseous through-flow medium through the surface of the permeable thermally-insulating wall (8), from one cavity to the other cavity, wherein this gas flow blocks, or at least inhibits, an opposite heat flow through the permeable thermally-insulating wall,

- a heat exchanger (11), which is configured to effect, when said fan (10) is in operation, heat exchange between the gaseous through-flow medium circulating in the closed gas circuit (9) on the one hand and a stream of a heat-exchange medium separated therefrom (19,20; 33,34) on the other hand.

and preferably wherein the insulation assembly of the building is applied against an existing external wall of the building, for example on the outside thereof, and/or on, in, or under the existing roof structure.

## Patentansprüche

1. Gebäude, ausgestattet mit einem Klimaregelungssystem zum Steuern eines Wärmeklimas eines Innenraums (1) des Gebäudes relativ zu einer Außenumgebung, beispielsweise eines beheizten Innenraums (1) relativ zu einer Außenumgebung, wobei eine Isolationsanordnung (2,3,25,26) des Klimaregelungssystems zwischen dem Innenraum (1) und der Außenumgebung installiert ist, beispielsweise wobei die Isolationsanordnung eine Außenwand oder ein Dach bildet oder damit integriert ist, wobei die Außenwand oder das Dach den Innenraum von der Außenumgebung trennt, wobei die Isolationsanordnung (2,3,25,26) umfasst:

- eine gasdichte Kammer mit einer Außenwand (5), einer Innenwand (7) in einem Abstand davon und einer Umfangswand (2a), wobei eine durchlässige wärmeisolierende Wand (8), die für ein gasförmiges Durchström-Medium durchlässig ist, die einen äußeren Hohlraum (4) mit der Außenwand und einen inneren Hohlraum (6) mit der Innenwand begrenzt, in der gasdichten Kammer vorhanden ist, wobei der äußere Hohlraum und der innere Hohlraum durch die durchlässige wärmeisolierende Wand (8) voneinander getrennt werden, wobei das Klimaregelungssystem ferner umfasst:

- einen Zirkulationskanal (12) für das gasförmige Durchström-Medium und ein Gebläse (10) für das gasförmige Durchström-Medium, wobei der Zirkulationskanal einen geschlossenen Gaskreislauf mit dem inneren Hohlraum, dem äußeren Hohlraum und der dazwischen angeordneten durchlässigen wärmeisolierenden Wand (8), die für ein gasförmiges Durchström-Medium durchlässig ist, bildet,

wobei der geschlossene Gaskreislauf mit einem gasförmigen Durchström-Medium (9), vorzugsweise mit einem von Luft verschiedenen Gas, beispielsweise mit Kohlendioxidgas, gefüllt ist, wobei das Gebläse (10) für das gasförmige Durchström-Medium dafür angeordnet ist, bei Zirkulation durch den geschlossenen Gaskreislauf Bewegung des gasförmigen Durchström-Medium durch die Oberfläche der durchlässigen wärmeisolierenden Wand (8) von einem Hohlraum zu dem anderen Hohlraum bereitzustellen, wobei dieser Gasstrom einen entgegengerichteten Wärmestrom durch die durchlässige wärmeisolierende Wand blockiert oder wenigstens hemmt,

- einen Wärmetauscher (11), der dafür gestaltet ist, wenn das Gebläse (10) arbeitet, Wärmetausch zwischen dem in dem geschlossenen Gaskreislauf (9) zirkulierenden gasförmigen Durchström-Medium einerseits und einem davon getrennten Strom eines Wärmetauschmediums (19,20; 33,34) andererseits zu bewirken.

2. Gebäude nach Anspruch 1, wobei die durchlässige wärmeisolierende Wand (8) eine gleichmäßige Durchlässigkeit für das zirkulierende gasförmige Durchström-Medium über eine Oberfläche davon, durch die Gas strömt, vorzugsweise über wenigstens einen größten Teil davon, beispielsweise wenigstens über 75 % dieser Oberfläche, aufweist.

3. Gebäude nach Anspruch 1 oder 2, wobei zwischen dem Innenraum einerseits und der Innenwand der Isolationsanordnung andererseits, beispielsweise vorher auf der Innenwand der Isolationsanordnung aufgebracht, eine wärmeisolierende Schicht vorhanden ist, wobei die Isolationsschicht beispielsweise aus Wolle, insbesondere Mineralwolle, Kunststoffschaum, Isolierperlen, expandiertem Polystyrol oder dergleichen besteht.

4. Gebäude nach einem der Ansprüche 1 - 3, wobei die durchlässige wärmeisolierende Wand (8) und das Gebläse (12) dafür gestaltet sind, eine Péclet-Zahl Pe von größer als 1, vorzugsweise größer als 3, zu erzielen, wobei die Pe-Zahl aus der Geschwindigkeit des gasförmigen Durchström-Mediums v, der Dicke der durchlässigen isolierenden Wand l, der spezifischen Wärme Cp, dem spezifischen Gewicht $\rho_g$ und der Wärmeleitfähigkeit $\lambda_g$ des Durchström-Mediums bestimmt wird:

$$Pe = v \, l \, Cp \, \rho_g / \lambda_g.$$

5. Gebäude nach einem oder mehreren der Ansprüche 1 - 4, wobei der Wärmetauscher (11; 22) dafür gestaltet ist, wenn das Gebläse (12) arbeitet, Wärmetausch zwischen dem in dem geschlossenen Gaskreislauf zirkulierenden gasförmigen Durchström-Medium einerseits und einem getrennten Luftstrom von Lüftungsluft zu oder von dem zugehörigen Innenraum des Gebäudes andererseits zu bewirken.

6. Gebäude nach einem oder mehreren der Ansprüche 1 - 5, wobei der Wärmetauscher (11; 22) dafür gestaltet ist, wenn das Gebläse (12) arbeitet, Wärmetausch zwischen dem in dem geschlossenen Gaskreislauf zirkulierenden gasförmigen Durchström-Medium einerseits und einem getrennten Strom von Heizmedium für den zugehörigen Innenraum andererseits, beispielsweise einem getrennten Strom von Wasser einer Wasserheizanlage für den zugehörigen Innenraum oder beispielsweise einem getrennten Luftstrom einer Warmluftheizanlage für den zugehörigen Innenraum, zu bewirken.

7. Gebäude nach einem oder mehreren der Ansprüche 1 - 6, wobei ein Teil der Umfangswand (2a) einen Teil des Zirkulationskanals (12) begrenzt und als Wärmetauscher gestaltet ist, beispielsweise wobei dieser Teil ferner einen Teil eines Lüftungsluftkanals zum Wärmetausch zwischen dem Durchström-Medium und der Lüftungsluft begrenzt.

8. Gebäude nach einem oder mehreren der Ansprüche 1 - 7, wobei die Isolationsanordnung ferner einen Lichtkollektor umfasst, beispielsweise in einem Sandwichaufbau in Kombination mit einer zweiten Isolationsanordnung nach einem oder mehreren der Ansprüche 1 - 7, wobei wenigstens eine der Isolationsanordnungen eine durchscheinende oder transparente Isolationsanordnung ist.

9. Gebäude nach Anspruch 8, wobei durch den Lichtkollektor ein Kollektormedium (27) strömen kann, das Wärme mit dem gasförmigen Durchström-Medium (9) tauscht.

10. Gebäude nach einem der Ansprüche 1 - 9, wobei die Isolationsanordnung (2) eine flache Platte ist, die eine innere gasdichte Kammer und eine Außenwand (5), eine Innenwand (7) in einem Abstand davon und eine Umfangswand (2a) aufweist, wobei eine durchlässige wärmeisolierende Wand (8) für ein gasförmiges Durchström-Medium, die einen äußeren Hohlraum mit der Außenwand (4) und ein innerer Hohlraum mit der Innenwand (6) begrenzt, in der gasdichten Kammer vorhanden ist, wobei der äußere Hohlraum (4) und der innere Hohlraum (6) durch die durchlässige wärmeisolierende Wand (8) voneinander getrennt werden.

11. Gebäude nach einem der Ansprüche 1 - 10, wobei das gasförmige Durchström-Medium Kohlendioxidgas ist.

12. Gebäude nach einem der Ansprüche 1 - 11, wobei die wärmeisolierende Wand (8), durch die das gasförmige Durchström-Medium strömen kann, aus expandiertem Polystyrol besteht, das für das gasförmige Durchström-Medium durchlässig ist.

13. Verfahren zum Steuern eines Wärmeklimas eines Innenraums (1) eines Gebäudes relativ zu einer Außenumgebung, beispielsweise eines beheizten Innenraums (1) relativ zu einer Außenumgebung, wobei eine Isolationsanordnung (2,3,25,26) des Klimaregelungssystems zwischen dem Innenraum (1) und der Außenumgebung installiert wird, beispielsweise wobei die Isolationsanordnung eine Außenwand oder ein Dach bildet oder damit integriert ist, wobei die Außenwand oder das Dach den Innenraum von der Außenumgebung trennt, wobei die Isolationsanordnung (2,3,25,26) umfasst:

- eine gasdichte Kammer mit einer Außenwand (5), einer Innenwand (7) in einem Abstand davon und einer Umfangswand (2a), wobei eine durchlässige wärmeisolierende Wand (8), die für ein gasförmiges Durchström-Medium durchlässig ist, die einen äußeren Hohlraum (4) mit der Außenwand und einen inneren Hohlraum (6) mit der Innenwand begrenzt, in der gasdichten Kammer vorhanden ist, wobei der äußere Hohlraum und der innere Hohlraum durch die durchlässige wärmeisolierende Wand (8) voneinander getrennt werden,
wobei das Klimaregelungssystem ferner umfasst:

- einen Zirkulationskanal (12) für das gasförmige Durchström-Medium und ein Gebläse (10) für das gasförmige Durchström-Medium, wobei der Zirkulationskanal einen geschlossenen Gaskreislauf mit dem inneren Hohlraum, dem äußeren Hohlraum und der dazwischen angeordneten durchlässigen wärmeisolierenden Wand (8), die für ein gasförmiges Durchström-Medium durchlässig ist, bildet,

wobei der geschlossene Gaskreislauf mit einem gasförmigen Durchström-Medium (9), vorzugsweise mit einem von Luft verschiedenen Gas, beispielsweise mit Kohlendioxidgas, gefüllt ist,
wobei das Gebläse (10) für das gasförmige Durchström-Medium dafür angeordnet ist, bei Zirkulation durch den geschlossenen Gaskreislauf Bewegung des gasförmigen Durchström-Medium durch die Oberfläche der durchlässigen wärmeisolierenden Wand (8) von einem Hohlraum zu dem anderen Hohlraum bereitzustellen, wobei dieser Gasstrom einen entgegengerichteten Wärmestrom durch die durchlässige wärmeisolierende Wand blockiert oder wenigstens hemmt,

- einen Wärmetauscher (11), der dafür gestaltet ist, wenn das Gebläse (10) arbeitet, Wärmetausch zwischen dem in dem geschlossenen Gaskreislauf (9) zirkulierenden gasförmigen Durchström-Medium einerseits und einem davon getrennten Strom eines Wärmetauschmediums (19,20; 33,34) andererseits zu bewirken.

und wobei vorzugsweise die Isolationsanordnung des Gebäudes an einer vorhandenen Außenwand des Gebäudes, beispielsweise an dessen Außenseite, und/oder an, in oder unter der vorhandenen Dachstruktur, angebracht wird.

**Revendications**

1. Bâtiment pourvu d'un système de régulation de conditions ambiantes destiné à réguler des conditions ambiantes thermiques d'un espace en intérieur (1) du bâtiment relativement à un environnement en extérieur, par exemple d'un espace en intérieur chauffé (1) relativement à un environnement en extérieur, dans lequel un ensemble d'isolation (2, 3, 25, 26) du système de régulation de conditions ambiantes est installé entre l'espace en intérieur (1) et l'environnement en extérieur, par exemple dans lequel l'ensemble d'isolation forme un mur externe ou un toit, ou est intégré à celui-ci, ledit mur externe ou toit séparant l'espace en intérieur de l'environnement en extérieur, dans lequel l'ensemble d'isolation (2, 3, 25, 26) comprend :

   - une chambre étanche aux gaz avec une paroi extérieure (5), une paroi intérieure (7) à une distance de celle-ci, et une paroi périphérique (2a), dans lequel une paroi thermo-isolante perméable (8) qui est perméable pour un agent gazeux d'écoulement, qui délimite une cavité extérieure (4) avec la paroi extérieure et une cavité intérieure (6) avec la paroi intérieure, est présente dans la chambre étanche aux gaz, ladite cavité extérieure et ladite cavité intérieure étant séparées l'une de l'autre par la paroi thermo-isolante perméable (8),
   dans lequel le système de régulation de conditions ambiantes comprend en outre :

      - un passage de circulation (12) pour l'agent gazeux d'écoulement et un ventilateur (10) pour l'agent gazeux d'écoulement, ledit passage de circulation formant un circuit de gaz fermé avec la cavité intérieure, la cavité extérieure, et la paroi thermo-isolante perméable interposée (8) qui est perméable pour un agent gazeux d'écoulement,

      dans lequel le circuit de gaz fermé est rempli avec un agent gazeux d'écoulement (9), de préférence avec un gaz autre que de l'air, par exemple avec un gaz de carbone de dioxyde, dans lequel le ventilateur (10) pour l'agent gazeux d'écoulement est agencé pour fournir, lors de la circulation à travers le circuit de gaz fermé, un mouvement de l'agent gazeux d'écoulement à travers la surface de la paroi thermo-isolante perméable (8), depuis une cavité jusqu'à l'autre cavité, dans lequel cet écoulement de gaz bloque, ou au moins empêche, un écoulement de chaleur opposé à travers la paroi thermo-isolante perméable,

      - un échangeur de chaleur (11), qui est configuré pour effectuer, lorsque ledit ventilateur (10) est en fonctionnement, un échange de chaleur entre l'agent gazeux d'écoulement circulant dans le circuit de gaz fermé (9) d'une part et un courant d'un agent d'échange de chaleur séparé de celui-ci (19, 20 ; 33, 34) d'autre part.

2. Bâtiment selon la revendication 1, dans lequel la paroi thermo-isolante perméable (8) a une perméabilité uniforme pour l'agent gazeux d'écoulement circulant par-dessus une surface de celle-ci à travers laquelle un gaz s'écoule, de préférence par-dessus au moins une partie la plus grande de celle-ci, par exemple au moins par-dessus 75 % de cette surface.

3. Bâtiment selon la revendication 1 ou 2, dans lequel une couche thermo-isolante est présente entre l'espace en intérieur d'une part et la paroi intérieure de l'ensemble d'isolation d'autre part, par exemple appliquée auparavant sur la paroi intérieure de l'ensemble d'isolation, ladite couche isolante étant faite, par exemple, de laine, en particulier de laine minérale, de mousse plastique, de billes isolantes, de polystyrène expansé, ou analogue.

4. Bâtiment selon l'une des revendications 1 à 3, dans lequel la paroi thermo-isolante perméable (8) et le ventilateur (12) sont configurés afin d'atteindre un nombre de Péclet Pe supérieur à 1, de préférence supérieur à 3, dans lequel le nombre Pe est déterminé à partir de la vitesse de l'agent gazeux d'écoulement v, de l'épaisseur de la paroi isolante perméable I, de la chaleur spécifique Cp, de la densité relative $\rho_g$, et de la conductivité thermique $\lambda_g$ de l'agent d'écoulement :

$$Pe = v \, I \, Cp \, \rho_g / \lambda_g.$$

5. Bâtiment selon une ou plusieurs des revendications 1 à 4, dans lequel l'échangeur de chaleur (11 ; 22) est configuré pour effectuer, lorsque le ventilateur (12) est en fonctionnement, un échange de chaleur entre l'agent gazeux d'écoulement circulant dans le circuit de gaz fermé, d'une part, et un courant distinct d'air de ventilation jusqu'à l'espace en intérieur associé, ou depuis celui-ci, du bâtiment, d'autre part.

6. Bâtiment selon une ou plusieurs des revendications 1 à 5, dans lequel l'échangeur de chaleur (11 ; 22) est configuré pour effectuer, lorsque le ventilateur (12) est en fonctionnement, un échange de chaleur entre l'agent gazeux d'écoulement circulant dans le circuit de gaz fermé d'une part et un courant distinct d'agent chauffant pour l'espace en intérieur associé d'autre part, par exemple un courant distinct d'eau d'une installation de chauffage à eau pour l'espace en intérieur associé ou par exemple un courant d'air distinct d'une installation de chauffage à air chaud pour l'espace en intérieur associé.

7. Bâtiment selon une ou plusieurs des revendications 1 à 6, dans lequel une partie de la paroi périphérique (2a) délimite une partie du passage de circulation (12) et est configurée sous forme d'échangeur de chaleur, par exemple dans lequel ladite partie délimite en outre une partie d'un canal d'air de ventilation pour un échange de chaleur entre l'agent d'écoulement et l'air de ventilation.

8. Bâtiment selon une ou plusieurs des revendications 1 à 7, dans lequel l'ensemble d'isolation comprend en outre un collecteur de lumière, par exemple en construction en sandwich, combiné avec un second ensemble d'isolation selon une ou plusieurs des revendications 1 à 7, dans lequel au moins un des ensemble d'isolation est un ensemble d'isolation translucide ou transparent.

9. Bâtiment selon la revendication 8, dans lequel un agent collecteur (27) peut s'écouler à travers le collecteur de lumière, qui échange de la chaleur avec l'agent gazeux d'écoulement (9).

10. Bâtiment selon l'une des revendications 1 à 9, dans lequel l'ensemble d'isolation (2) est un panneau plat qui a une chambre interne étanche aux gaz et une paroi extérieure (5), une paroi intérieure (7) à une distance de celle-ci, et une paroi périphérique (2a), dans lequel une paroi thermo-isolante perméable (8) pour un agent gazeux d'écoulement, qui délimite une cavité extérieure avec la paroi extérieure (4) et une cavité intérieure avec la paroi intérieure (6), est présente dans la chambre étanche aux gaz, ladite cavité extérieure (4) et ladite cavité intérieure (6) étant séparées l'une de l'autre par la paroi thermo-isolante perméable (8).

11. Bâtiment selon l'une des revendications 1 à 10, dans lequel l'agent gazeux d'écoulement est un gaz de carbone de dioxyde.

12. Bâtiment selon l'une des revendications 1 à 11, dans lequel la paroi thermo-isolante (8) à travers laquelle l'agent gazeux d'écoulement peut s'écouler est faite de polystyrène expansé qui est perméable pour l'agent gazeux d'écoulement.

13. Procédé pour réguler des conditions ambiantes thermiques d'un espace en intérieur (1) d'un bâtiment relativement à un environnement en extérieur, par exemple d'un espace en intérieur chauffé (1) relativement à un environnement en extérieur, dans lequel un ensemble d'isolation (2, 3, 25, 26) du système de régulation de conditions ambiantes est installé entre l'espace en intérieur (1) et l'environnement en extérieur, par exemple dans lequel l'ensemble d'isolation forme un mur externe ou un toit, ou est intégré à celui-ci, ledit mur externe ou toit séparant l'espace en intérieur de l'environnement en extérieur, dans lequel l'ensemble d'isolation (2, 3, 25, 26) comprend :

- une chambre étanche aux gaz avec une paroi extérieure (5), une paroi intérieure (7) à une distance de celle-ci, et une paroi périphérique (2a), dans lequel une paroi thermo-isolante perméable (8) qui est perméable pour un agent gazeux d'écoulement, qui délimite une cavité extérieure (4) avec la paroi extérieure et une cavité intérieure (6) avec la paroi intérieure, est présente dans la chambre étanche aux gaz, ladite cavité extérieure et ladite cavité intérieure étant séparées l'une de l'autre par la paroi thermo-isolante perméable (8),
dans lequel le système de régulation de conditions ambiantes comprend en outre :

- un passage de circulation (12) pour l'agent gazeux d'écoulement et un ventilateur (10) pour l'agent gazeux d'écoulement, ledit passage de circulation formant un circuit de gaz fermé avec la cavité intérieure, la cavité extérieure, et la paroi thermo-isolante perméable interposée (8) qui est perméable pour un agent gazeux d'écoulement,

dans lequel le circuit de gaz fermé est rempli avec un agent gazeux d'écoulement (9), de préférence avec un gaz autre que de l'air, par exemple avec un gaz de carbone de dioxyde, dans lequel le ventilateur (10) pour l'agent gazeux d'écoulement est agencé pour fournir, lors de la circulation à travers le circuit de gaz fermé, un mouvement de l'agent gazeux d'écoulement à travers la surface de la paroi thermo-isolante perméable (8), depuis une cavité jusqu'à l'autre cavité, dans lequel cet écoulement de gaz bloque, ou au moins empêche, un écoulement de chaleur opposé à travers la paroi thermo-isolante perméable,

- un échangeur de chaleur (11), qui est configuré pour effectuer, lorsque ledit ventilateur (10) est en fonctionnement, un échange de chaleur entre l'agent gazeux d'écoulement circulant dans le circuit de gaz fermé (9) d'une part et un courant d'un agent d'échange de chaleur séparé de celui-ci (19, 20 ; 33, 34) d'autre part.

et de préférence dans lequel l'ensemble d'isolation du bâtiment est appliqué contre un mur externe existant du bâtiment, par exemple sur la face externe de celui-ci, et/ou sur, dans, ou sous la structure de toit existante.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 7810215

- EP 224063 A